# EUROPÄISCHE PATENTANMELDUNG

(11) **EP 1 186 853 A2**
(43) Veröffentlichungstag der Anmeldung: **13.03.2002**
(21) Anmeldenummer: 01120980.6
(22) Anmeldetag: 31.08.2001
(51) Int. Cl.: G01B 7/315

(54) **Dynamisch verformbares Gummiprodukt sowie System und Verfahren zur Erfassung von Verformungen bei derartig dynamisch verformbaren Gummiprodukten**

(30) Priorität: 05.09.2000 DE 10043976
(71) Anmelder: Continental Aktiengesellschaft, 30165 Hannover (DE)
(72) Erfinder: Lehmann, Jörg, Dr., 30451 Hannover (DE)

(57) **Zusammenfassung**

Bei einem dynamisch verformbaren Gummiprodukt, wie z.B. einem Fahrzeug-reifen (1), sind in der mindestens einem Sensor zur Erfassung der Verformung zugewandten Seite des Gummiproduktes Profile (3a, 3b) eingeprägt, wobei die Profile (3a, 3b) in Bewegungsrichtung des Gummiproduktes angeordnet sind und blockartig Sektoren (6) mit abwechselnd unterschiedlichem Abstand zu dem entsprechenden Sensor bilden.

## Beschreibung

Die Erfindung betrifft ein dynamisch verformbares Gummiprodukt, wie z.B. einen Fahrzeugreifen mit einer Lauffläche und Seitenwänden.

Die Erfindung betrifft ferner ein System und ein Verfahren zur Erfassung von Verformungen bei derartigen dynamisch verformbaren Gummiprodukten.

Gummiprodukte, wie z.B. Reifen, Luftfedern, Transportbänder, Zahnriemen etc., werden üblicherweise dynamisch stark beansprucht und unterliegen einer hohen Belastung und Verschleiß. Zur Überwachung der Gummiprodukte und zur Kontrolle und Steuerung z.B. des Fahrverhaltens von Fahrzeugen ist daher bekannt, die Verformung der dynamisch verformbaren Gummiprodukte zu messen.

Hierzu ist z.B. bei Fahrzeugreifen bekannt, Magnetfelder in die Reifen einzuprägen, die mit Hilfe geeigneter Sensoren, wie z.B. Hallsensoren gemessen werden. Die Magnetfelder sind hierbei in zwei konzentrischen Kreisen mit unterschiedlichen Radien in die fahrzeugseitige Seitenwand des Fahrzeugreifens in unmittelbarer Nähe zu den Sensoren zur Magnetfeldmessung eingeprägt. Pro Kreis sind die entsprechenden Profile der Magnetfelder segmentförmig um den Winkel • um die Radnabe gesehen aufgeteilt, in dem abwechselnd gepolte Magnetsegmente nebeneinander angeordnet sind und zusammen einen geschlossenen Kreis bilden. Bei sich drehendem Fahrzeugreifen würde somit durch den Sensor aufgrund des segmentförmigen Profils ein Rechtecksignal gemessen werden. Das idealisierte Rechtecksignal weist in der Praxis aufgrund physkalischer Einflüsse eine deutlich geringere Flankensteilheit auf. Das resultierende Signal kann in bekannter Weise so ausgewertet werden, dass die Verformung des Fahrzeug-reifens bestimmbar ist, da sich bei Verformung der Magnetfeldwinkel im kreisförmigen Profil nicht proportional zum Magnetfeldwinkel im unteren kreisförmigen Profil ändert.

Nachteilig bei dem bekannten Verfahren ist, dass der Abstand zwischen der Seitenwand des Fahrzeugreifens mit den eingeprägten Profilen und den Sensoren relativ klein sein muss. Dies ist insbesondere für Nutzfahrzeuge nur mit hohem technischen Aufwand realisierbar.

Aufgabe der Erfindung war es daher, ein verbessertes dynamisch verformbares Gummiprodukt anzugeben, mit dem die Verformung des Gummiprodukts zuverlässiger und einfacher zu erfassen ist.

Die Aufgabe wird dadurch gelöst, dass in der mindestens einem Sensor zur Erfassung der Verformung zugewandten Seite des Gummiprodukts Profile eingeprägt sind, wobei die Profile in Bewegungsrichtung des Gummiprodukts angeordnet sind und blockartig Sektoren mit abwechselnd unterschiedlichem Abstand zu dem entsprechenden Sensor bilden.

Erfindungsgemäß wird somit ein Profil in das Gummiprodukt eingeprägt, das Segmente mit abwechselndem Abstand hat, wobei ein idealisiertes Rechtecksingal bei sich relativ zu einem Sensor bewegendem Gummiprodukt aufgrund einer Abstandsmessung erfasst wird. Das Abstands-Messsignal wird in bekannter Weise ausgewertet. Hieraus wird die Verformung des Gummiprodukts bestimmt.

Vorzugsweise ist das Gummiprodukt ein Fahrzeugreifen, wobei die Profile in die Seitenwände des Fahrzeugsreifens eingeprägt sind, die dem mindestens einen Sensor zur Erfassung der Seitenwandverformung zugewandt sind. Hierbei umschreiben die Profile mindestens eine konzentrische Kreisbahn, vorzugsweise zwei Kreisbahnen mit unterschiedlichem Radius. Im Querschnitt durch die Seitenwand gesehen haben die Sektoren der Profile abwechselnd eine unterschiedliche Höhe relativ zu der Oberfläche der Seitenwand.

Insbesondere zur kapazitiven Abstandsmessung und zur Wirbelstrommessung eines induzierten Magnetfeldes ist es vorteilhaft, wenn die Profile elektrisch leitend und geerdet sind. Die Profile von Fahrzeugreifen sind vorzugsweise elektrisch mit der Fahrzeugmasse leitend verbunden und über die Lauffläche geerdet.

In einer alternativen Ausführungsform wird der Abstand optisch gemessen. Hierzu sind reflektierende Profile mit blockartigen Sektoren auf konzentrischen Kreisbahnen vorgesehen, wobei die Sektoren einen abwechselnden Reflektionsgrad aufweisen oder einen abwechselnden Abstand zu dem entsprechenden Sensor aufweisen.

Entsprechend ist in einem System zur Erfassung der Verformung von den erfindungsgemäßen Gummiprodukten der mindestens eine Sensor ein kapazitiver Sensor zur Messung der Kapazität zu dem im Abstand des Sensors befindlichen Profil. Das System hat eine Auswerteeinheit, um die Verformung aus dem zum Abstand proportionalen gemessenen Kapazitätssignals bestimmen.

In einer anderen Ausführungsform des Systems ist ein Ultraschallsensor zur Messung der Laufzeit des Ultraschalls vom Sendezeitpunkt bis zum Eintreffen des von dem im Abstand des Sensors befindlichen Profil reflektierten Signals vorgesehen. Mit der Auswerteeinheit wird die Verformung aus dem zum Abstand proportionalen Laufzeitsignal bestimmt.

In einer anderen Ausführungsform des Systems ist vorgesehen, dass ein Wirbelstromsensor zur Messung eines in dem Profil des Gummiprodukts induzierten Magnetfeldes verwendet wird. Entsprechend wird durch die Auswerteeinheit die Verformung aus dem gemessenen induzierten Magnetfeld bestimmt, das zum Abstand des Sensors zum Profil proportional ist.

In einer anderen Ausführungsform des Systems ist ein optischer Sensor zur Messung der Lichtstärke eines von dem reflektierten Profil zur rückreflektierten Lichtstrahls vorgesehen. Die Verformung wird aus dem zum Abstand proportionalen Lichtstärkesignal bestimmt.

Erfindungsgemäß ist in dem Verfahren zur Erfassung von Verformungen bei den erfindungsgemäßen Gummiprodukten vorgesehen, ein zeitliches Messsignal mit dem mindestens einen Sensor zur Bestimmung des Abstands zwischen dem entsprechenden Sensor und den sich in Bezug auf den entsprechenden Sensor bewegenden Sektoren des Profils aufzunehmen und das Messsignal zur Bestimmung der Verformung auszuwerten.

Das Aufnehmen des zeitlichen Messsignals kann kapazitiv mittels Ultraschall, mittels eines Wirbelstromsensors durch Induzieren eines Magnetfeldes oder optisch erfolgen.

Die beschriebenen Messarten haben den Vorteil, dass der mindestens eine Sensor relativ weit von dem Profil auf dem Gummiprodukt beabstandet sein kann. Die Messung ist zudem störunanfällig und das System auf diese Weise zuverlässig.

Die Erfindung wird nachfolgend anhand der beigefügten Zeichnungen näher erläutert. Es zeigen:
- Fig. 1 -: eine schematische Seitenansicht eines Fahrzeugreifens mit Profilen in konzentrischen Kreisbahnen und auf die Profile gerichtete Sensoren an der Fahrzeugreifenaufhängung;
- Fig. 2 -: einen Querschnitt durch die Seitenwand des Fahrzeugreifens mit blockartigen Sektoren mit abwechselnden Höhen des Profils;
- Fig. 3 -: eine Querschnittsansicht des Profils aus Fig. 1 mit angrenzendem Ultraschallsensor;
- Fig. 4 -: eine Querschnittsansicht aus Fig. 1 mit angrenzendem kapazitiven Sensor;
- Fig. 5 -: eine Querschnittsansicht aus Fig. 1 mit angrenzendem Wirbelstromsensor.

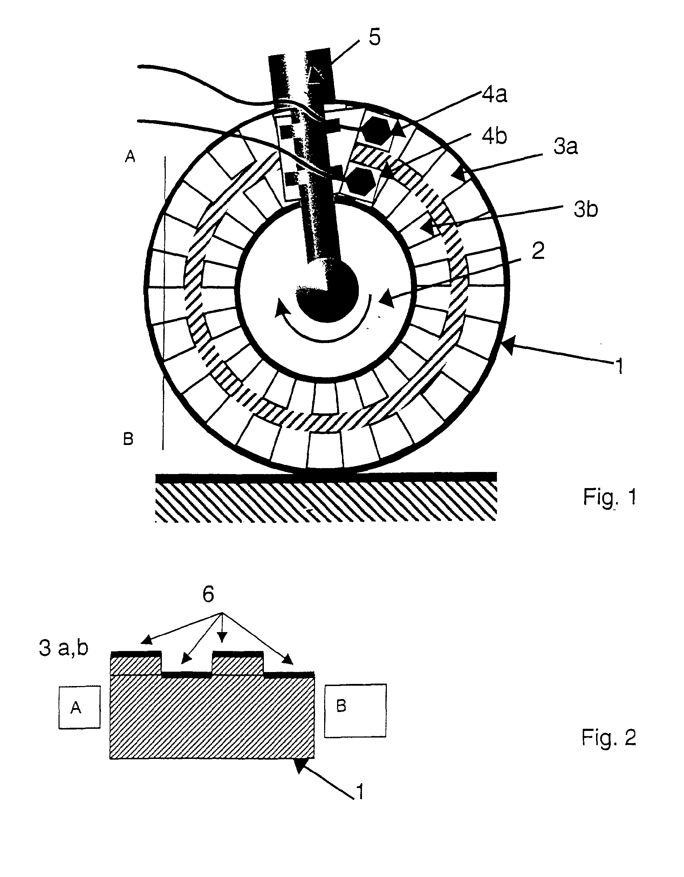

Die **Fig. 1** lässt einen Fahrzeugreifen 1 in der Seitenansicht erkennen. Der Fahrzeugreifen 1 ist auf eine Felge 2 aufgezogen und hat zwei Profile 3a, 3b, die in konzentrischen Kreisbahnen mit jeweils unterschiedlichem Radius in die Seitenwand eingeprägt sind. Im Abstand von den Profilen 3a, 3b ist jeweils ein Sensor 4a, 4b angeordnet und auf die Profile 3a, 3b ausgerichtet. Die Sensoren 4a, 4b sind an die Fahrzeugreifenaufhängung 5, d.h. an das Federbein angebracht.

Die Profile 3a, 3b sind segmentförmig in blockartige Sektoren 6 mit abwechselnden Höhe relativ zur Oberfläche der Seitenwand des Fahrzeugreifens 1 aufgeteilt, so dass bei Rotation des Fahrzeugreifens 1 von den Sensoren 4a, 4b jeweils abwechselnde Abstände eines Sensors 4a, 4b zu dem entsprechenden Profil 3a, 3b gemessen werden. Auf diese Weise ist durch die segmentierten Profile 3a, 3b ein idealerweise rechteckförmiges Messsignal bei Rotation des Fahrzeugreifens 1 eingeprägt.

Bei Verformung des Fahrzeugreifens 1, z.B. durch eine auf den Fahrzeugreifen 1 wirkende Last tritt eine Verformung der Profile 3a, 3b und der entsprechenden Sektoren 6 auf. Dies hat eine Änderung des Rechtecksignals zur Folge, die entsprechend als Maß für die Verformung ausgewertet werden kann. Zu dem kann auch die direkte Abstandsänderung der Profile 3a, 3b relativ zu den Sensoren 4a, 4b als Maß für die Verformung ausgewertet werden.

Die Profile 3a, 3b haben, wie in der **Fig. 2** im Querschnitt skizziert, blockartige Sektoren 6 mit abwechselnden Abständen relativ zu dem entsprechenden an das jeweilige Profil angrenzenden Sensor 4a, 4b. Die Sektoren 6 können z.B. einen konstanten Winkel ausgehend von der Mittelachse des Fahrzeugreifens haben.

Die Sektoren 6 der Profile 3a, 3b können gebildet werden, in dem jeder zweite Sektor 6 auf die Seitenwand z.B. durch Vulkanisieren aufgebracht wird. Die Profile 3a, 3b können aber auch in die Seitenwand des Fahrzeugreifens 1 eingeprägt werden.

In einer besonderen Ausführungsform sind die Sektoren 6 reflektierend und haben abwechselnde Reflektionskoeffizienten. Sie können aber auch gleiche Reflektionskoeffizienten haben und entsprechend der in der Fig. 2 dargestellten Art abwechselnde Abstände zu dem entsprechenden Sensor 4a, 4b haben.

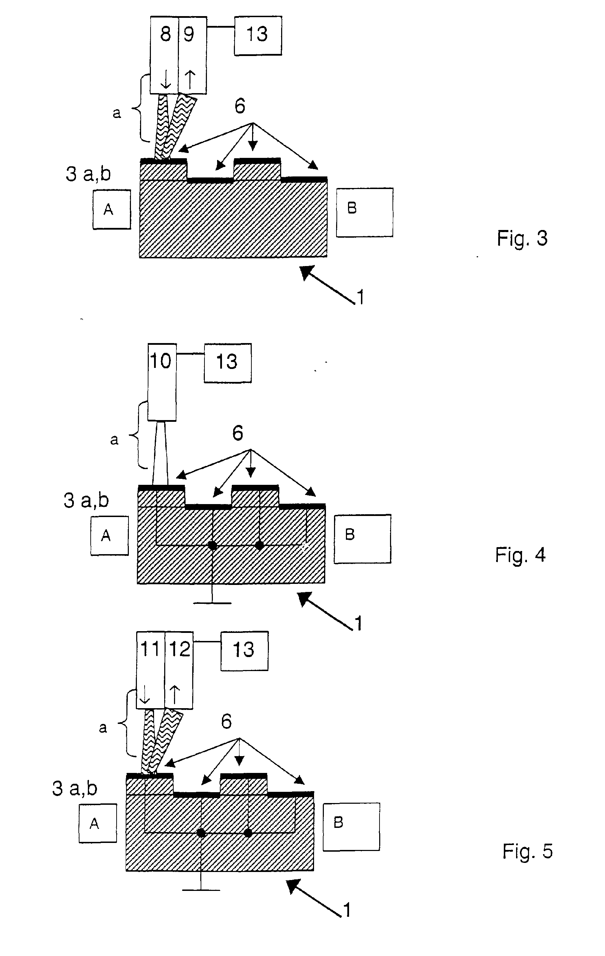

Die **Fig. 3** lässt das Profil 3a, 3b aus der Fig. 2 im Querschnitt zusammen mit einem Ultraschallsensor 7 erkennen, der einen Ultraschallsender 8 zum Aussenden von Ultraschallwellen auf das Profil 3a, 3b und einen Ultraschallempfänger 9 zum Empfangen von reflektierten Ultraschallwellen hat. Durch Messen der Laufzeit des Ultraschallsignals vom Sendezeitpunkt bis zum Eintreffen des durch das im Abstand von dem Ultraschallsensor 7 angeordnete Profil 3a, 3b reflektierten Signals kann der Abstand zwischen Ultraschallsensor 7 und Profil 3a, 3b gemessen werden. Der Abstand ist abhängig von der Tiefe des Profils 3a, 3b, d.h. von dem entsprechenden Sektor 6, der dem Ultraschallsensor 7 gegenüber liegt. Bei Rotation des Fahrzeugreifens 1 wird auf diese Weise aufgrund der abwechseln-den Tiefen des Profils 3a, 3b idealerweise ein Rechtecksignal gemessen. Dieses Rechtecksignal kann wie oben beschrieben zur Erfassung der Verformung des Fahrzeugreifens 1 ausgewertet werden.

Die **Fig. 4** lässt das Profil 3a, 3b aus der Fig. 2 im Querschnitt zusammen mit einem kapazitiven Sensor 10 erkennen. Mit Hilfe des grundsätzlich bekannten kapazitiven Sensors 10 kann die Kapazität C zwischen kapazitiven Sensor 10 und Profil 3a, 3b gemessen werden. Die Kapazität C verhält sich umgekehrt proportional zum Abstand, so dass der kapazitive Sensor 10 ein zum Abstand proportionales Spannungs- bzw. Stromsignal liefert. Bei Rotation des Fahrzeug-reifens 1 ergibt sich aufgrund der blockartigen Sektoren 6 mit abwechselndem Abstand des Profils 3a, 3b bei den erhöhten Sektoren aufgrund des kleineren Abstands eine größere Kapazität C und bei den vertieften Sektoren 6 aufgrund des größeren Abstands eine kleinere Kapazität C. Mit Hilfe des kapazitiven Sensors 10 kann daher bei Rotation des Fahrzeugsreifens 1 ebenfalls ein idealerweise rechteckförmiges Signal gemessen werden. Bei dem Übergang zwischen den Sektoren 6 werden Zwischenwerte gemessen, so dass die Flanken nicht optimal steil sind. Die resultierenden Messsignale sind dennoch geeignet, um zur Erfassung der Verformung des Fahrzeugreifens 1 ausgewertet zu werden.

Die **Fig. 5** lässt das Profil 3a, 3b aus Fig. 2 im Querschnitt mit einem Wirbelstromsensor 11 erkennen. Die blockartigen Sektoren sind jeweils elektrisch leitfähig und geerdet. Der Wirbelstromsensor 11 erzeugt ein Magnetfeld, das in der leitfähigen Oberfläche der Sektoren 6 einen Strom induziert. Dieser Strom erzeugt seinerseits wiederum ein Magnetfeld, dessen Stärke von dem Empfänger 12 des Wirbelstromsensors 11 gemessen wird. Die Stärke des gemessenen induzierten Magnetfeldes hängt wesentlich von der elektrischen Leitfähigkeit des Profils 3a, 3b und dem Abstand zu dem Wirbelstromsensor 11 ab. Bei Rotation des Fahrzeugreifens 1 wird daher aufgrund des segmentierten Profils 3a, 3b mit abwechselnden Abständen der Sektoren idealerweise ein Rechtecksignal gemessen, das in der oben beschriebenen Weise zur Erfassung der Verformung des Fahrzeugreifens 1 ausgewertet werden kann.

Vorzugsweise wird das Messsignal in sämtlichen Ausführungsformen mit einem Tiefpass gefiltert, um hochfrequente Störungen zu eliminieren und in einer Auswerteeinheit 13 ausgewertet. Die Eckfrequenz des Tiefpassfilters ist in erster Linie von der nachfolgenden Signalverwendung abhängig und darauf in bekannter Weise anzupassen.

Selbstverständlich ist das beschriebene System und Messverfahren nicht auf Fahrzeugreifen beschränkt. Es kann vielmehr für eine Vielzahl dynamisch verformbarer Gummiprodukte oder ähnlicher Produkte eingesetzt werden, wie z.B. zur Erfassung der Verformung von Luftfedern, Transportbändern, Zahnriemen etc..

## Patentansprüche

1. Dynamisch verformbares Gummiprodukt,
**dadurch gekennzeichnet,**
**dass** in der mindestens einem Sensor (7, 10, 11) zur Erfassung der Verformung zugewandten Seite des Gummiproduktes Profile (3a, 3b) eingeprägt sind, wobei die Profile (3a, 3b) in Bewegungsrichtung des Gummiproduktes angeordnet sind und blockartig Sektoren (6) mit abwechselnd unterschiedlichem Abstand zu dem entsprechenden Sensor (7, 10, 11) bilden.

2. Gummiprodukt nach Anspruch 1 als Fahrzeugreifen (1) mit einer Lauffläche und mit Seitenwänden, **dadurch gekennzeichnet, dass** in der mindestens einem Sensor (7, 10, 11) zur Erfassung der Seitenwandverformung zugewandten Seitenwand Profile (3a, 3b) eingeprägt sind, wobei die Profile (3a, 3b) mindestens eine konzentrische Kreisbahn umschreiben und blockartig Sektoren (6) mit abwechselnd unterschiedlicher Höhe relativ zur Oberfläche der Seitenwand bilden.

3. Gummiprodukt nach Anspruch 1 oder 2, **dadurch gekennzeichnet, dass** die Profile (3a, 3b) elektrisch leitfähig sind.

4. Gummiprodukt nach Anspruch 3, **dadurch gekennzeichnet, dass** die Profile (3a, 3b) geerdet sind.

5. Gummiprodukt nach Anspruch 4 als Fahrzeugreifen, **dadurch gekennzeichnet, dass** die Profile (3a, 3b) elektrisch leitend mit der Fahrzeugmasse verbunden und über die Lauffläche geerdet sind.

6. Gummiprodukt nach Anspruch 1 oder 2, **dadurch gekennzeichnet, dass** die Profile (3a, 3b) reflektierend sind.

7. Dynamisch verformbares Gummiprodukt,
**dadurch gekennzeichnet,**
**dass** auf der mindestens einem Sensor zur Erfassung der Verformung zugewandten Seite des Gummiprodukts reflektierende Profile (3a, 3b) angeordnet sind, wobei die Profile (3a, 3b) in Bewegungsrichtung des Gummiprodukts angeordnet sind und blockartig Sektoren (6) mit abwechselndem Reflektionskoeffizient aufweisen.

8. System zur Erfassung der Verformung von dynamisch verformbaren Gummiprodukten nach einem der Ansprüche 3 bis 5, **dadurch gekennzeichnet,**
**dass** der mindestens eine Sensor ein kapazitiver Sensor (10) zur Messung der Kapazität zu dem im Abstand des kapazitiven Sensors (10) befindlichen Profils (3a, 3b) ist, wobei eine Auswerteeinheit (13) vorgesehen ist, um die Verformung aus dem gemessenen Kapazitätssignal zu bestimmen, das zum Abstand des kapazitiven Sensors (10) zum Profil (3a, 3b) proportional ist.

9. System zur Erfassung der Verformung von dynamisch verformbaren Gummiprodukten nach einem der Ansprüche 1 bis 5, **dadurch gekennzeichnet, dass** der mindestens eine Sensor ein Ultraschallsensor (7) zur Messung der Laufzeit des Ultraschalls vom Sendezeitpunkt bis zum Eintreffen des reflektierten Signals ist, das durch das im Abstand des Ultraschallsensors (7) befindliche Profil (3a, 3b) reflektiert wird, wobei eine Auswerteeinheit (13) vorgesehen ist, um die Verformung aus dem gemessenen Laufzeitsignal zu bestimmen, das zum Abstand des Ultraschallsensors (7) zum Profil (3a, 3b) proportional ist.

10. System zur Erfassung der Verformung von dynamisch verformbaren Gummiprodukten nach einem der Ansprüche 3 bis 5, **dadurch gekennzeichnet, dass** ein Wirbelstromsensor (11) zur Messung eines in dem Profil (3a, 3b) des Gummiproduktes induzierten Magnetfeldes und eine Auswerteeinheit (13) vorgesehen ist, um die Verformung aus dem gemessenen induzierten Magnetfeld zu bestimmen, das zum Abstand des Wirbelstromsensors (11) zum Profil (3a, 3b) proportional ist.

11. System zur Erfassung der Verformung von dynamisch verformbaren Gummiprodukten nach Anspruch 6, **dadurch gekennzeichnet, dass** der mindestens eine Sensor ein optischer Sensor zur Messung der Lichtstärke eines von dem reflektierten Profil zurückreflektierten Lichtstrahls ist, wobei eine Auswerteeinheit (12) vorgesehen ist, um die Verformung aus dem Lichtstärkesignal zu bestimmen, das zum Abstand des optischen Sensors zum Profil (3a, 3b) proportional ist.

12. System nach einem der Ansrpüche 8 bis 11, **dadurch gekennzeichnet, dass** die Auswerteeinheit (12) einen Tiefpassfilter zum Herausfiltern hochfrequenter Störungssignale hat.

13. Verfahren zur Erfassung von Verformungen bei dynamisch verformbaren Gummiprodukten nach einem der Ansprüche 1 bis 6 mit mindestens einem Sensor (7, 10, 11),
**gekennzeichnet durch**
- Aufnehmen eines zeitlichen Messsignals mit dem mindestens einen Sensor (7, 10, 11) zur Bestimmung des Abstands zwischen dem entsprechenden Sensor (7, 10, 11) und den sich in Bezug auf den entsprechenden Sensor (7, 10, 11) bewegenden Sektoren des Profils (3a, 3b);
- Auswerten des Messsignals zur Bestimmung der, Verformung.

14. Verfahren nach Anspruch 13, **gekennzeichnet durch** Aufnehmen des zeitlichen Messsignals **durch** kapazitive Messung des Abstands zwischen mindestens einem kapazitiven Sensor (10) und den Sektoren (6) des Profils (3a, 3b).

15. Verfahren nach Anspruch 13, **gekennzeichnet durch** Aufnehmen des zeitlichen Messsignals **durch** Ultraschallmessung (7) des Abstands zwischen mindestens einem Ultraschallsensor (7) und den Sektoren (6) des Profils (3a, 3b).

16. Verfahren nach Anspruch 13, **gekennzeichnet durch** Aufnehmen des zeitlichen Messsignals **durch** Messung des in den Sektoren (6) des Profils (3a, 3b) **durch** mindestens einen Wirbelstromsensor (11) induzierten Magnetfeldes als Abstand zwischen dem mindestens einem Wirbelstromsensor (11) und den Sektoren (6) des Profils (3a, 3b).
